# EUROPÄISCHE PATENTSCHRIFT

(11) **EP 1 483 195 B1**
(45) Veröffentlichungstag und Bekanntmachung des Hinweises auf die Patenterteilung: **17.08.2005**
(21) Anmeldenummer: 03711909.6
(22) Anmeldetag: 01.03.2003
(51) Int. Cl.: B67D 5/37, F16L 37/44

(54) **ANSCHLUSSKUPPLUNG MIT DATENSCHNITTSTELLE**
CONNECTIVE COUPLING A DATA INTERFACE
RACCORD AVEC INTERFACE DE DONNEES

(30) Priorität: 02.03.2002 DE 20203247 U
(43) Veröffentlichungstag der Anmeldung: 08.12.2004
(73) Patentinhaber: Weh, Erwin, D-89257 Illertissen (DE); WEH, Wolfgang, D-89257 Illertissen (DE)
(72) Erfinder: Weh, Erwin, D-89257 Illertissen (DE); WEH, Wolfgang, D-89257 Illertissen (DE)
(74) Vertreter: Fiener, Josef
(86) Internationale Anmeldenummer: PCT/EP2003/002113
(87) Internationale Veröffentlichungsnummer: WO 2003/074417

(56) Entgegenhaltungen:
- EP-A- 0 487 844
- WO-A-98/05898
- DE-C- 19 834 671
- US-A- 5 365 984

## Beschreibung

Die Erfindung betrifft eine Anschlußkupplung für die Übertragung von gasförmigen und/oder flüssigen Fluiden, insbesondere zum Befüllen von Fahrzeug-Gastanks. Eine Anchlußkupplung nach dem Oberbegriff des Anspruchs 1 ist aus der EP-A-0 487 844 bekannt.

Mit derartigen Anschlußkupplungen soll eine sichere Übertragung eines Fluids von einer Druckquelle, beispielsweise von einer Betankungsanlage aus zu einem Fahrzeug erreicht werden. Besonders wichtig ist hierbei die einfache und sichere Bedienbarkeit, so dass auch bei Betankungsdrücken von 200 bar und mehr eine problemlose Handhabung ermöglicht wird.

Eine derartige Anschlußkupplung ist in der WO 98/05898 der Anmelder beschrieben, wobei die Schnellanschlußkupplung ein Gehäuse mit einem Fluideinlaß und einem Fluidauslaß aufweist, sowie mehrere Ventile vorgesehen sind, um eine sichere Abdichtung der Schnellanschlußkupplung bis zur vollständigen Herstellung der Verbindung zu gewährleisten. Diese Ventile werden dabei nach Ansetzen der Schnellanschlußkupplung durch Drehen eines Steuerungshebels in einer bestimmten vorgegebenen Reihenfolge geschaltet, wobei zuerst durch das Aufschieben der Schnellanschlußkupplung an einen Anschlußnippel das Auslaßventil geöffnet wird, dann bei weiterer Bewegung des Steuerungshebels die als Verriegelungselemente dienenden Spannzangen geschlossen werden und schließlich das Einlaßventil geöffnet wird. Der Steuerungshebel ist hierbei über eine Exzenterwelle mit der Schiebehülse für die Beaufschlagung der Spannzangen und mit einem Dichtkolben in Eingriff, der auch den Fluideinlaß nach erfolgtem Anschluß der Steckkupplung freigibt. Wesentlich ist dabei, dass die Anschlußkupplung und der Anschlußnippel exakt zueinanderpassen und für unterschiedliche Fluidarten aufeinander abgestimmt sind, so dass hierzu z.T. mechanische Codierungen vorgesehen sind, um ggf. gefährliche Verwechslungen oder Fehlbetankungen zu vermeiden.

Demzufolge liegt der Erfindung die Aufgabe zugrunde, eine Anschlußkupplung zu schaffen, die bei einfachem Aufbau eine besonders sichere Handhabung und Anschließbarkeit ermöglicht.

Diese Aufgabe wird gelöst durch eine Anschlußkupplung gemäß den Merkmalen des Patentanspruches 1. Bevorzugte Weiterbildungen der Erfindung sind Gegenstand der abhängigen Ansprüche.

Die vorgeschlagene Anschlußkupplung mit Datenschnittstelle, insbesondere in Form eines Datensenders eignet sich vorzugsweise für den Einsatz bei einer Schnellanschlußkupplung zur Betankung von Erdgasfahreugen, wobei sich eine besonders einfache und kompakte Bauweise ergibt, da der Datensender außen an der Schiebehülse angebracht ist und somit bereits zu Beginn des Anschlußvorganges das Zusammenpassen der Anschlußkupplung zum Anschlußnippel eindeutig identifizieren kann. Insbesondere kann die Datenschnittstelle in bevorzugter Ausführungsform durch die dem Anschlußnippel gegenüberliegende Anordnung die für die Befüllung passende Fluidart oder Füllmenge übermitteln, was Fehlbetankungen sicher vermeidet und daher eine besonders sichere und bequeme Handhabung ergibt.

Durch eine innerhalb der Anschlußkupplung integrierte Datenleitung entlang dem mittleren Gehäuseteil wird eine sichere Führung erreicht und somit ein geschützter, unkomplizierter Aufbau der Anschlußkupplung erzielt. Da die Datenleitung in bevorzugter Weise entlang einer ohnehin vorhandenen Fluidleitung zur Basisstation bzw. Betankungsanlage geführt werden kann, wird eine einfache, verdrillungsfreie Handhabung gewährleistet, so dass die Anschlußkupplung auch von Laien problemlos angeschlossen werden kann.

Nachfolgend wird ein Ausführungsbeispiel anhand der beiliegenden Zeichnung näher erläutert und beschrieben. Hierin zeigt:

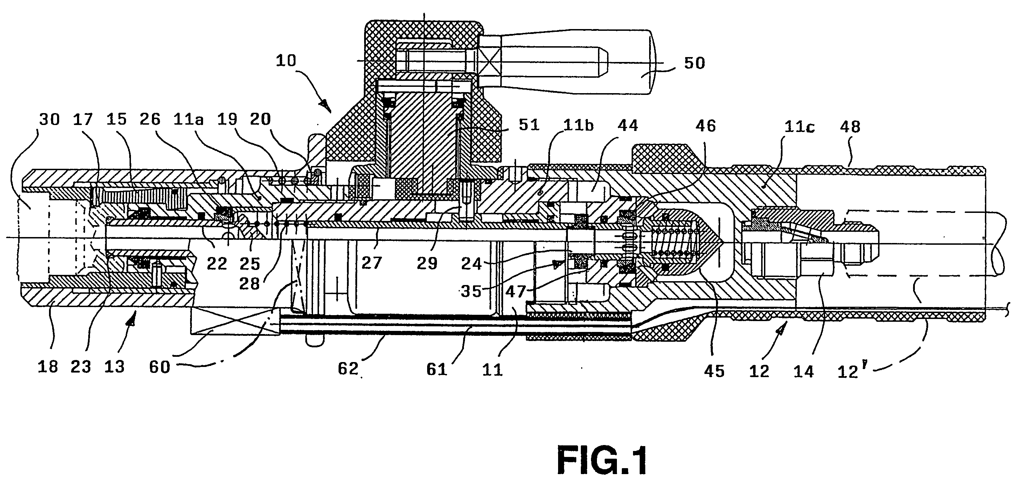

- Fig. 1: eine Seitenansicht einer Anschlußkupplung mit einer integrierten Datenschnittstelle, wobei die Anschlußkupplung im Längs-Halbschnitt und in angeschlossener Stellung an einen Anschlußnippel dargestellt ist.

In Fig. 1 ist ein bevorzugtes Ausführungsbeispiel einer Anschlußkupplung 10 in Form einer sog. Schnellanschlußkupplung dargestellt, die an einen hier links angedeuteten Anschlußnippel 30 angekuppelt ist. Die Anschlußkupplung 10 weist ein rohrförmiges Gehäuse 11 mit mehreren, miteinander verschraubten Gehäuseteilen 11a, 11b und 11c auf, wobei das hier rechte Gehäuseteil 11c als Einlaßbereich 12 dient und der linke Bereich als Auslaß 13 für die Weiterleitung des zu übertragenden Fluids an den Anschlußnippel 30. Der Einlaßbereich 12 weist einen Anschlußadapter 14 auf, an den über ein Gewinde eine Fluidleitung 12' zur Zuführung des zu übertragenden Fluids angeschlossen werden kann. Der Anschlußadapter 14 mit einer eingesetzten Filterhülse kann hierbei in Anpassung an das zu übertragende Fluid, insbesondere an die jeweils gewünschten Zuführdruckwerte, Durchlaßquerschnitte usw. entsprechend gestaltet sein.

Im Bereich des Auslasses 13 sind mehrere, in Rohrform angeordnete, längliche Spannzangen 15 vorgesehen, die kurz vor dem Aufstecken auf den Anschlußnippel 30 radial nach außen aufgespreizt werden können. An dem hier linken äußeren Ende mit nach innen abgekröpften Flächen weisen die Spannzangen 15 jeweils korrespondierend zu einem nutförmigen Anschlußprofil des Anschlußnippels 30 ausgebildete Eingriffsprofile 17 auf. Deren Aufbau ist im eingangs genannten Stand der Technik ebenfalls näher beschrieben, so dass hier auf eine weitere Erläuterung verzichtet werden kann. Es sei aus Gründen der Vollständigkeit lediglich noch erwähnt, dass im Bereich des Auslasses 13 innen ein Dichtkolben 22 geführt ist, der an seiner vorderen Stirnseite eine konische Dichtfläche 23 zur Anlage an einem Dichtring des Anschlußnippels 30 aufweist, so dass das im wesentlichen entlang der Zentralachse der Anschlußkupplung 10 strömende gasförmige und/oder flüssige Fluid nicht nach außen hin austreten kann.

Um die Spannzangen 15 herum ist eine äußere Schiebehülse 18 vorgesehen, die an dem zylindrischen Außenmantel des hier linken Gehäuseteils 11a geführt ist und mit einer Druckfeder 19 in Richtung vom Anschlußnippel 30 weg vorgespannt ist. Die Druckfeder 19 stützt sich hierbei an einen Abstützring 20 ab und schiebt somit die Schiebehülse 18 zu einem Steuerungshebel 50 mit einer Exzenterwelle 51 hin. Am Umfang der Schiebehülse 18 ist als Datenschnittstelle ein Datensender 60 angeordnet, insbesondere aufgeklebt. Dessen Datenleitung 61 führt durch ein Schutzrohr 62 zur Fluidleitung 12', um entlang dieser befestigt zu werden, z.B. mit Kabelbindern oder Schellen. Somit können von einer stationären Betankungsanlage Daten von und zu der Anschlußkupplung 10 übertragen werden bzw. an diese übermittelt werden, um in Anpassung an die jeweils verwendete Anschlußkupplung 10 und/oder Anschlußnippel 30 und deren Durchlaßquerschnitten den Betankungsdruck oder Durchflußmengen zu steuern. Zudem kann damit die Verriegelung der Spannzangen 15 bzw. die Verschiebeposition der Schiebehülse 18 überprüft werden, um mit einem entsprechenden Signal den Betankungsvorgang freizugeben.

Das am Dichtkolben 22 vorgesehene Auslaßventil 25 dichtet mittels eines Dichtringes als Ventilsitz 26 gegenüber dem Dichtkolben 22 in geschlossener Stellung ab. Das Auslaßventil 25 ist hierbei von einer Druckfeder 28 beaufschlagt, die sich zur rechten Seite hin auf einen Schaltschieber 27 abstützt. Durch dieses Auslaßventil 25 wird sichergestellt, dass in der hier nicht dargestellten abgekuppelten Position bzw. bis kurz vor dem Anschluß der Anschlußkupplung 10 an den Anschlußnippel 30 das durch den Anschlußadapter 14 zugeführte Fluid nicht ausströmen kann. Die Position des Dichtkolbens 22 kann durch die Datenschnittstelle ebenfalls festgestellt werden, so dass die Datenabfrage über den Datensender 60 dabei bevorzugt zu diesem Zeitpunkt erfolgt, um Fehler bei der Betankung zu vermeiden.

Der Schaltschieber 27 wird beim Abkuppeln der Anschlußkupplung 10 vom Anschlußnippel 30 entlang der Anschlußkupplungs-Achse verschoben und bildet so zusammen mit einer Dichtscheibe 24 ein Entlüftungsventil 35. Das Entlüftungsventil 35 und der Schaltschieber 27 werden hierbei durch Verschwenken des Steuerungshebels 50 betätigt, da die Exzenterwelle 51 mit dem Schaltschieber 27 gekoppelt ist, nämlich durch Eingriff mehrerer Bolzen 29, die mit einem äußeren Ringschieber 31 in Verbindung stehen.

Wie aus der hier dargestellten Anschlußstellung der Anschlußkupplung 10 ersichtlich ist, wird beim Aufstecken auf den Anschlußnippel 30 das Eingriffsprofil 17 der Spannzangen 15 mit dem Anschlußnippel 30 in Eingriff gebracht. In dieser Position befindet sich der Datensender 60 in unmittelbarer Nähe zum Anschlußnippel 30, so dass in Art eines Näherungsschalters z.B. dessen magnetische Eigenschaften (oder andere Kennwerte) abgefragt werden können, um dessen Größe oder Anschlußmaße über die Datenleitung 61 an die Basisstation zu übermitteln. Diese kann dann die Betankungswerte passend zur jeweiligen Bauart des Anschlußnippels auswählen und freigeben bzw. sperren. Der Datensender 60 kann dabei auch ringförmig um die Schiebhülse 18 herum angeordnet sei, wie dies in Strichpunktlinien angedeutet ist, sowie auch als Transponder ausgebildet sein. Bei dieser Ausführung ist der Datensender 60 dann bevorzugt auf der Schiebehülse 18 aufgeschrumpft oder in eine Umhüllung (z.B. in Art eines Schrumpfschlauches oder einer Kunststoffummantelung) eingebettet.

Durch Betätigung (Verschwenken um ca. 180°) des Steuerungshebels 50 in die hier gezeigte Position wird die Schiebehülse 18 über die Spannzangen 15 geschoben und diese somit verriegelt. Diese Position kann durch den Datensender 60 ebenfalls festgestellt werden, insbesondere wenn der Datensender 60 entlang der Schiebehülse 18 auskragend am Vorderende des Schutzrohrs 62 befestigt ist, um so die Verschiebebewegung der Schiebehülse 18 relativ zum Gehäuse 11 zu erfassen.

Bei Druckbeaufschlagung (Beginn des Betankungsvorganges) wird der Dichtkolben 22 zunächst (auch unter Wirkung der Feder 28) nach links verschoben. Bei Anlage an der Dichtfläche 23 wird unter Verschiebung des Dichtkolbens 22 nach rechts zudem der Ventilsitz 26 am Dichtkolben 22 und damit das Auslaßventil 25 geöffnet. Dabei hat das Eingriffsprofil 17 an dem korrespondierend ausgebildeten Anschlußprofil des Anschlußnippels 30 bereits eingegriffen, wobei durch die Axialbewegung der Schiebehülse 18 diese über die radial äußeren Enden der Spannzangen 15 greift, so dass diese am Anschlußnippel 30 formschlüssig gehalten werden.

Zum Lösen der Anschlußkupplung 10 und damit dem Zurückführen der hier dargestellten Anschlußstellung in die Öffnungsstellung wird die Schiebehülse 18 nach Verdrehen des Steuerungshebels 50 von der Druckfeder 19 zurückgeschoben. Nach einem kurzen Weg können die Spannzangen 15 sich wieder radial nach außen aufspreizen. Da vorher der Fluiddruck unterbrochen wurde (z. B. durch Schließen eines Betankungsventils), wird zudem der Dichtkolben 22 hier nach rechts in Richtung zum Einlaßbereich 12 hin verschoben, sowie das Auslaßventil 25 am Ventilsitz 26 geschlossen. Auch diese Position kann durch den Datensender 60 erfasst werden.

Im Einlaßbereich 12 ist weiterhin ein Einlaßventil 45 mit einem zugeordneten Ventilsitz 46 zentral im Gehäuse 11 bzw. dem Gehäuseteil 11c der Anschlußkupplung 10 angeordnet. Das Einlaßventil 45 ist ebenfalls durch den Steuerungshebel 50 und seine Exzenterwelle 51 durch die Koppelung mit dem Schaltschieber 27 axial verschiebbar. Dieser Schaltschieber 27 verschiebt nämlich über die Dichtscheibe 24 in der gezeigten Anschlußstellung einen Ventilschieber 47 des Einlaßventils 45 in die Öffnungsstellung, so dass das vom Einlaßbereich 12 zuströmende Fluid durch den Ventilschieber 47 und einen Durchlaß in der Dichtscheibe 24 sowie den rohrförmigen Schaltschieber 27 zum Auslaß 13 hin fließen kann.

Beim Lösen der Anschlußkupplung 10 wird durch Verdrehen des Steuerungshebels 50 (um ca. 180°) der Schaltschieber 27 über die Bolzen 29 nach links verschoben, so dass sich auch die Dichtscheibe 24 aus dem Dichteingriff lösen kann. Hierbei kann sich der Druck innerhalb der Anschlußkupplung 10 über Durchtrittschlitze zu einem Druckausgleichsraum 44 hin abbauen. Hierdurch kann noch anstehendes Druckmedium über den Druckausgleichsraum 44 zu einer (nicht dargestellten) Entlüftungsbohrung strömem, die parallel zu der zentralen Fluidpassage (durch die Ventile 45, 35 und 25 hindurch) im Gehäuseteil 11c der Anschlußkupplung 10 verläuft. Diese Entlüftungsbohrung kann in eine zweite Leitung münden, die bevorzugt als Rückführschlauch ausgebildet ist und ebenso wie die Zuführleitung 12' von einer Gehäusekappe 48 umgrenzt ist, um als Handgriff für eine einfache Handhabung dienen zu können. Die Entlüftungsleitung und die am Adapter 14 angeschlossene Fluidleitung 12' sowie die Datenleitung 61 verlaufen somit immer zumindest weitgehend parallel zueinander, so dass ein Verdrillen der Datenleitung 61 beim Einsatz vermieden wird.

## Patentansprüche

1. Anschlußkupplung für die Übertragung von gasförmigen und/oder flüssigen Fluiden, insbesondere zum Befüllen von Fahrzeug-Gastanks, mit einer Schiebehülse (18) zur Verriegelung von Anschlußprofilen, insbesondere Spannzangen (15), und mit einer Datenschnittstelle, insbesondere einem Datensender (60) **dadurch gekennzeichnet, dass**
die Datenschnittstelle an der Schiebehülse (18) angeordnet ist.

2. Anschlußkupplung nach Anspruch 1, **dadurch gekennzeichnet, dass** die in form eines Datensenders (60) ausgeführte Datenschnittstelle auf der Umfangsfläche der Schiebehülse (18) befestigt, insbesondere aufgeklebt ist.

3. Anschlußkupplung nach Anspruch 1 oder 2, **dadurch gekennzeichnet, dass**
zwischen vorderem Gehäuseteil (11a) und hinterem Gehäuseteil (11c) der Anschlußkupplung (10) ein Schutzrohr (62) angeordnet ist.

4. Anschlußkupplung nach einem der Ansprüche 1 bis 3, **dadurch gekennzeichnet, dass**
die in form eines Datensenders (60) ausgeführte Datenschnittstelle eine Datenleitung (61) aufweist, die mit einer Fluidleitung (12') verbindbar ist.

5. Anschlußkupplung nach Anspruch 3 und 4, **dadurch gekennzeichnet, dass**
die Datenleitung (61) im Schutzrohr (62) parallel zum Gehäuse (11) geführt ist.

6. Anschlußkupplung nach einem der Ansprüche 1 bis 5, **dadurch gekennzeichnet, dass**
die in form eines Datensenders (60) ausgeführte Datenschnittstelle ringförmig ausgebildet ist und um die Schiebehülse (18) herum angeordnet ist.

7. Anschlußkupplung nach Anspruch 6, **dadurch gekennzeichnet, dass**
die in form eines Datensenders (60) ausgeführte Datenschnittstelle auf der Schiebehülse (18) aufgeschrumpft ist.

8. Anschlußkupplung wenigstens nach Anspruch 1, **dadurch gekennzeichnet, dass**
die in Form eines Datensenders (60) ausgeführte Datenschnittstelle in eine Umhüllung der Schiebehülse (18) eingebettet ist.

9. Anschlußkupplung nach einem der Ansprüche 1 bis 8, **dadurch gekennzeichnet, dass**
die in Form eines Datensenders (60) ausgeführte Datenschnittstelle als Transponder ausgebildet ist.

## Claims

1. A connection coupling for transferring gaseous and/or liquid fluids, especially for filling gas tanks of motor vehicles, comprising a sliding sleeve (18) for locking connecting profile sections, especially collet chucks (15), and comprising a data interface, especially a data transmitter (60),
**characterized in that**
the data interface is arranged on the sliding sleeve (18).

2. A connection coupling according to claim 1, **characterized in that** the data interface, realized in the form of a data transmitter (60), is fastened and in particular glued to the circumferential surface of the sliding sleeve (18).

3. A connection coupling according to claim 1 or 2, **characterized in that** a protective tube (62) is arranged between the front housing part (11a) and the rear housing part (11c) of the connection coupling (10).

4. A connection coupling according to one of the claims 1 to 3, **characterized in that** the data interface, realized in the form of a data transmitter (60), comprises a data line (61) which can be connected with a fluid line (12').

5. A connection coupling according to claims 3 and 4, **characterized in that** the data line (61) is guided in the protective tube (62) parallel to the housing (11).

6. A connection coupling according to one of the claims 1 to 5, **characterized in that** the data interface, realized in the form of a data transmitter (60), is provided with a ring-like configuration and is arranged around the sliding sleeve (18).

7. A connection coupling according to claim 6, **characterized in that** the data interface, realized in the form of a data transmitter (60), is shrunk onto the sliding sleeve (18).

8. A connection coupling at least according to claim 1, **characterized in that** the data interface, realized in the form of a data transmitter (60), is embedded in a covering of the sliding sleeve (18).

9. A connection coupling according to one of the claims 1 to 8, **characterized in that** the data interface, realized in the form of a data transmitter (60), is arranged as a transponder.

## Revendications

1. Raccord pour la transmission de fluides gazeux et/ou liquides, en particulier pour le remplissage de réservoirs à gaz pour véhicules, avec une douille coulissante (18) pour verrouiller des profilés de raccordement en particulier des pinces de serrage (15), et avec une interface de données, notamment un émetteur de données (60), **caractérisé en ce que** l'interface de données est disposée sur la douille coulissante (18).

2. Raccord selon la revendication 1, **caractérisé en ce que** l'interface de données, réalisée sous la forme d'un émetteur de données (60), est fixée, en particulier par collage, sur la face périphérique de la douille coulissante (18).

3. Raccord selon la revendication 1 ou 2, **caractérisé en ce que**, entre la partie de boîtier avant (11a) et la partie de boîtier arrière (11c) du raccord (10) est disposé un tube protecteur (62).

4. Raccord selon l'une des revendications 1 à 3, **caractérisé en ce que** l'interface de données, réalisée sous la forme d'un émetteur de données (60), présente une ligne de données (61), susceptible d'être reliée à une conduite de fluide (12')

5. Raccord selon les revendications 3 et 4, **caractérisé en ce que** la ligne de données (61) est guidée parallèlement au boîtier (11), dans le tube protecteur (62).

6. Raccord selon l'une des revendications 1 à 5, **caractérisé en ce que** l'interface de données, réalisée sous la forme d'un émetteur de données (60), est de forme annulaire et est disposée autour de la douille coulissante (18).

7. Raccord selon la revendication 6, **caractérisé en ce que** l'interface de données, réalisée sous la forme d'un émetteur de données (60), est rapportée par frettage sur la douille coulissante (18).

8. Raccord au moins selon la revendication 1, **caractérisé en ce que** l'interface de données, réalisée sous la forme d'un émetteur de données (60), est incorporée dans un gainage de la douille coulissante (18).

9. Raccord selon l'une des revendications 1 à 8 **caractérisé en ce que** l'interface de données, réalisée sous la forme d'un émetteur de données (60), est réalisée sous la forme de transpondeur.
